# EUROPÄISCHE PATENTSCHRIFT

(11) **EP 3 515 741 B1**
(45) Veröffentlichungstag und Bekanntmachung des Hinweises auf die Patenterteilung: **16.08.2023**
(21) Anmeldenummer: 17780321.0
(22) Anmeldetag: 19.09.2017
(51) Int. Cl.: B60L 50/15, B60L 58/13, B60L 58/14, B60L 58/20, B60W 10/06, B60W 10/08, B60W 10/196, B60W 30/18, B60L 7/14, B60K 6/48, B60W 20/11, B60W 20/13, B60W 20/40, B60L 7/24, B60K 6/26, B60W 10/26, B60W 30/192, B60W 10/11, B60W 10/18

(54) **VERFAHREN ZUM BETREIBEN EINES HYBRIDFAHRZEUGS**
METHOD FOR OPERATING AN HYBRID VEHICLE
PROCÉDÉ DE FONCTIONNEMENT D'UN VÉHICULE HYBRIDE

(30) Priorität: 20.09.2016 DE 102016217955
(43) Veröffentlichungstag der Anmeldung: 31.07.2019
(73) Patentinhaber: Voith Patent GmbH, 89522 Heidenheim (DE)
(72) Erfinder: LAZARENKA, Vitali, 73433 Aalen (DE); LINDENMAIER, Jochen, 89542 Herbrechtingen (DE); GÖTTE, Johannes, 89537 Giengen (DE); GROSS, Bernd, 89518 Heidenheim (DE)
(74) Vertreter: Voith Patent GmbH - Patentabteilung
(86) Internationale Anmeldenummer: PCT/EP2017/073582
(87) Internationale Veröffentlichungsnummer: WO 2018/054880

(56) Entgegenhaltungen:
- EP-A1- 1 160 119
- DE-A1- 10 100 889
- DE-A1-102004 055 128
- DE-A1-102008 040 308
- DE-A1-102010 046 616
- DE-A1-102011 087 969
- DE-A1-102012 001 740
- DE-A1-102012 206 772
- DE-A1-102014 009 448
- US-A1- 2015 197 238

## Beschreibung

Die Erfindung betrifft ein Verfahren zum Betreiben eines Hybridfahrzeugs nach der im Oberbegriff von Anspruch 1 näher definierten Art.

Hybridfahrzeuge sind aus dem Bereich der Personenkraftwagen soweit aus dem allgemeinen Stand der Technik bekannt. Zunehmend werden Hybridfahrzeuge auch im Bereich der Nutzfahrzeuge eingesetzt, beispielsweise bei kleinen Nutzfahrzeugen oder insbesondere bei Nutzfahrzeugen, welche häufig gestartet und wieder angehalten werden. Derartige Nutzfahrzeuge können beispielsweise Lieferfahrzeuge oder insbesondere Omnibusse sein, vor allem Omnibusse, welche im Linienverkehr innerhalb von Städten bewegt werden.

Die DE 10 2004 055 128 A1 beschreibt eine Hybridantriebseinheit mit einem Verbrennungsmotor und einer motorisch oder generatorisch betreibbaren elektrischen Maschine. Für den Fall, dass die elektrische Maschine generatorisch betrieben wird, kann über die elektrische Maschine Leistung in das System abgegeben werden, was vorzugsweise so erfolgt, dass in einem ersten Intervall eine elektrische Leistungsabgabe erfolgt, welche höher als die Leistungsaufnahme eines Bordnetzes des Fahrzeugs ist und in einem zweiten Intervall die elektrische Maschine ausgeschaltet wird. Durch dieses Verfahren wird erreicht, dass die elektrische Maschine nicht in Schwachlastbetriebspunkten gefahren werden muss, was ihren Wirkungsgrad verschlechtern würde.

Die DE 10 2012 001 740 A1 beschreibt ein Verfahren zur Steuerung einer Hybridantriebseinheit für ein Fahrzeug. Diese umfasst einen Elektromotor als erste Antriebsquelle und einen Verbrennungsmotor als zweite Antriebsquelle. Ferner ist ein Energiespeicher vorgesehen. Auf Basis von Streckendaten einer geplanten zurückzulegenden Strecke wird nun eine voraussichtliche erforderliche Gesamtantriebsleistung für die geplante Strecke ermittelt. Anschließend wird die Aufteilung der Antriebsleistung zwischen der ersten und der zweiten Antriebsquelle sowie die Möglichkeit der elektrischen Rekuperation über die erste Antriebsquelle im generatorischen Betrieb so abgestimmt, dass die Strecke energieoptimiert zurückgelegt werden kann.

Zum weiteren Stand der Technik kann außerdem auf die DE 10 2008 040 308 A1 verwiesen werden, welche eine elektronische Steuerung für ein Hybridfahrzeug zeigt, auf die DE 101 00 889 A1, welche ein Verfahren zur Sicherstellung der Energieversorgung in Fahrzeugen mit Start-/Stoppbetrieb zeigt, auf die DE 10 2014 009 448 A1, welche ein Verfahren zur fahrstreckenabhängigen Steuerung einer Energiespeichereinrichtung eines zumindest teilweise elektrisch angetriebenen Fahrzeugs zeigt, auf die EP 1 160 119 A1, welche ein System zum Abbremsen eines Fahrzeugs über verschiedene Bremsmöglichkeiten beschreibt sowie die DE 10 2010 046 616 A1, welche ein System zum Versorgen elektrisch betriebener Verbraucher eines von einem Kraftfahrzeug umfassten Bordnetzes beschreibt, wird hingewiesen.

Grundsätzlich ist es aus diesem und dem allgemeinen Stand der Technik bekannt, dass bei Hybridfahrzeugen auf die Lichtmaschine verzichtet wird. Die elektrische Energieversorgung des Bordnetzes erfolgt somit aus dem Hybridsystem, beispielsweise indem ein Energiewandler, insbesondere ein DC/DC-Wandler, Leistung aus dem Spannungsniveau des elektrischen Netzes des Hybridantriebs auf das Spannungsniveau des elektrischen Netzes, welches als Bordnetz verwendet wird, wandelt. Insgesamt erfordert dies im Allgemeinen eine vergleichsweise große Energiespeichereinrichtung in dem Hybridsystem, um die Anforderungen an die Energieversorgung des Bordnetzes erfüllen zu können und gleichzeitig die Aufgaben bei der Hybridisierung des Fahrzeugs zu übernehmen. Bei einem vergleichsweise leichten Personenkraftwagen stellt dies kein Problem dar. Bei einem im Vergleich dazu typischerweise sehr viel schwereren Nutzfahrzeug macht dies sehr große und damit teure und schwere Energiespeichereinrichtungen notwendig, was einen Nachteil darstellt, insbesondere dann, wenn das Hybridsystem des Fahrzeugs als sogenannter Mild-Hybrid ausgelegt werden soll, also als Hybridsystem, welches lediglich zur Unterstützung des Fahrens, nicht jedoch zum ausschließlichen elektrischen Fahren des Fahrzeugs geeignet ist, da ein solches typischerweise verwendet wird um die Energiespeichereinrichtung nicht zu groß werden zu lassen.

Die Aufgabe der vorliegenden Erfindung besteht nun darin, ein Verfahren zum Betreiben eines Hybridfahrzeuges anzugeben, welches gegenüber dem Stand der Technik verbessert ist.

Erfindungsgemäß wird diese Aufgabe durch ein Verfahren mit den Merkmalen im Anspruch 1 gelöst. Vorteilhafte Ausgestaltungen und Weiterbildungen des erfindungsgemäßen Verfahrens ergeben sich aus den hiervon abhängigen Unteransprüchen.

Bei dem erfindungsgemäßen Verfahren zum Betreiben eines Hybridfahrzeugs ist es vergleichbar wie im Stand der Technik vorgesehen, dass das Hybridfahrzeug mit einer Verbrennungskraftmaschine, einer elektrischen Maschine und einem Getriebe betrieben wird. Das Hybridfahrzeug soll dabei insbesondere als Nutzfahrzeug, und hier besonders bevorzugt als Omnibus ausgebildet sein. Das Hybridfahrzeug umfasst ein erstes elektrisches Netz und ein zweites elektrisches Netz als Bordnetz, auf einem niedrigeren Spannungsniveau als das erste elektrische Netz. Das erste elektrische Netz auf einem höheren Spannungsniveau als das zweite elektrische Netz ist dabei mit der elektrischen Maschine, einer elektrischen Energiespeichereinrichtung sowie einem Energiewandler zwischen dem ersten elektrischen Netz und dem zweiten elektrischen Netz verbunden. Der Energiewandler kann besonders bevorzugt als DC/DC-Wandler ausgebildet sein. Das Hybridfahrzeug verzichtet in dem zweiten elektrischen Netz auf eine Lichtmaschine, sodass die elektrische Versorgung des zweiten elektrischen Netzes, welches als das Bordnetz des Hybridfahrzeugs ausgebildet sein soll, über das erste elektrische Netz, also das elektrische Netz des hybriden Antriebssystems erfolgen muss.

Erfindungsgemäß ist es nun vorgesehen, dass das erste elektrische Netz als Teil eines Getriebesystems ausgebildet ist, welches zusammen mit den mit ihm gekoppelten Komponenten über ein Getriebesteuergerät angesteuert wird. Die Ansteuerung ist gemäß diesem ersten Aspekt des erfindungsgemäßen Hybridfahrzeugs also in das Getriebesystem integriert, wobei auch die elektrische Maschine und der elektrische Energiespeicher des ersten elektrischen Netzes, welcher nachfolgend auch als Hybrid-Batterie bezeichnet wird, Teil dieses Getriebesystems sind. Anstelle einer tatsächlichen Batterie kann unter den Begriff dabei auch ein andersartiger elektrischer Energiespeicher, beispielsweise in Form von Kondensatoren fallen. Prinzipiell ist auch eine Kombination von Kondensatoren und Batteriezellen in beliebiger technologischer Ausführung, also beispielsweise in Form eines Bleiakkumulators, eines Lithium-Ionen-Akkumulators oder Ähnliches denkbar.

Die Energiespeichereinheit ist weiterhin derart in das Getriebesystem eingebunden, dass auch dann ein Betrieb möglich ist, wenn die Energiespeichereinheit ausfällt. Dies ist möglich, da das zweite elektrische Netz zwei parallel verschaltete mögliche Energieversorger aufweist, einmal das erste elektrische Netz mit der elektrischen Maschine und einmal die Energiespeichereinheit, die unabhängig voneinander von dem Getriebesteuergerät angesteuert werden können.

Ist beispielsweise nur die elektrische Maschine für die Energieversorgung des zweiten elektrischen Netzes geschaltet, braucht diese auch nur so viel Energie bereitstellen, wie im zweiten elektrischen Netz gerade benötigt wird.

Erfindungsgemäß ist es nun ferner vorgesehen, dass über die elektrische Maschine Leistung gewonnen wird. Diese Leistung dient dann zum Laden der Hybrid-Batterie und über diese zur Versorgung sowohl des hybriden Antriebssystems als auch des zweiten elektrischen Netzes mit Leistung. Der erfindungsgemäße Regelungsgedanke sieht dabei vor, dass die Energieversorgung des zweiten elektrischen Netzes bei der Leistungsgewinnung eine höhere Priorität hat als eine motorische Unterstützung des Antriebs der Eingangswelle durch die elektrische Maschine. Der Aufbau, welcher insbesondere als sogenanntes Mild-Hybrid-System ausgestaltet ist, priorisiert also bei der Energieerzeugung durch die elektrische Maschine, beispielsweise im Bremsbetrieb des Hybridfahrzeugs, zur elektrischen Energieversorgung des zweiten elektrischen Netzes gegenüber einer Unterstützung des Antriebsstrangs durch die elektrische Maschine. Der Schwerpunkt des elektrischen Betriebs des Hybridsystems liegt also nicht mehr wie im Stand der Technik üblich auf der Unterstützung des Antriebsstranges beim Anfahren und Beschleunigen, sondern wird mit höchster Priorität zur Versorgung des Bordnetzes eingesetzt. Lediglich dann, wenn noch Überschussleistung vorhanden ist, wird eine elektromotorische Unterstützung des Antriebs gestattet, sodass sich der Anwendungsschwerpunkt der Hybridtechnik von der primären Antriebsunterstützung auf die primäre Bordenergieversorgung verschiebt.

Gemäß der Erfindung ist dabei vorgesehen, dass eine mittlere Zeitdauer von Traktionsphasen des Hybridfahrzeugs ermittelt wird. Ferner wird ein mittlerer elektrischer Energiebedarf durch das zweite elektrische Netz ermittelt. Eine motorische Unterstützung des Antriebs der Eingangswelle durch die elektrische Maschine erfolgt nur dann und so lange, wie die aktuelle Kapazität der elektrischen Energiespeichereinrichtung größer oder gleich der Summe aus dem mittleren elektrischen Energiebedarf des zweiten elektrischen Netzes während der mittleren Zeitdauer und einer vorgegebenen Restkapazität des elektrischen Energiespeichers ist.

Die Priorisierung der Energieversorgung des zweiten elektrischen Netzes kann also gemäß dieser vorteilhaften Weiterbildung in der Art realisiert werden, dass im Vorfeld einer Traktionsphase deren zu erwartende mittlere Zeitdauer abgeschätzt wird, was vorzugsweise durch einen gleitenden Mittelwert erfolgen kann, um so den Einfluss von "Ausreißern" einzudämmen. Auf Basis dieser mittleren zu erwartenden Zeitdauer und eines mittleren Energiebedarfs für das zweite elektrische Bordnetz wird dann die für das Bordnetz benötigte elektrische Arbeit bzw. Kapazität aus der elektrischen Energiespeichereinrichtung abgeschätzt. Zu dieser wird eine Restkapazität der elektrischen Energiespeichereinrichtung hinzuaddiert, welche immer vorgehalten wird, um eine Tiefentladung der elektrischen Energiespeichereinrichtung zu vermeiden. Ausgehend von der aktuell vorliegenden Kapazität wird dann geprüft, ob diese größer als die Summe der beiden Werte ist. Ist die aktuelle Kapazität größer, so wird die Differenz dieser aktuellen Kapazität bis zur errechneten Summe für einen motorischen Antrieb der elektrischen Energiespeichereinrichtung während der Traktionsphase des Hybridfahrzeugs freigegeben. Der Antrieb des Hybridfahrzeugs kann dann also aus der Verbrennungskraftmaschine einerseits und der elektrischen Maschine andererseits erfolgen, solange die aktuelle Kapazität der elektrischen Energiespeicherung oberhalb dieses Summenwerts als Limit für den sogenannten Boost-Betrieb liegt. Sobald dieser Ladezustand des Boost-Limits erreicht wird, wird die elektrische Maschine nicht weiter betrieben. Im Idealfall wird sie durch eine elektrische Versorgung zum Ausgleich ihrer eigenen Verlustleistung elektrisch drehmomentfrei geschaltet. Die weitere Traktionsphase erfolgt ausschließlich mit Leistung aus der Verbrennungskraftmaschine. Somit ist sichergestellt, dass zumindest im zeitlichen Mittel die Versorgung des zweiten elektrischen Netzes immer in ausreichender Größe aus der elektrischen Energiespeichereinrichtung erfolgen kann.

Eine weitere sehr günstige Ausgestaltung sieht es nun ferner vor, dass die elektrische Versorgung des zweiten elektrischen Netzes durch das erste elektrische Netz und den elektrischen Energiewandler so lange erfolgt, bis eine für den Start der Verbrennungskraftmaschine durch die elektrische Maschine erforderliche Minimalkapazität der elektrischen Energiespeichereinrichtung erreicht ist. Gemäß dieser vorteilhaften Weiterbildung wird das oben beschriebene Verfahren dahingehend abgewandelt, dass die elektrische Energiespeichereinrichtung durch das Bordnetz, also das zweite elektrische Netz, nicht bis zur minimalen Restkapazität, um eine Tiefentladung zu vermeiden, entladen wird, sondern dass immer, und dies gilt insbesondere bei einer elektrischen Energieversorgung des zweiten elektrischen Netzes während eines Stillstands des Hybridfahrzeugs, die Entladung nur soweit erfolgen darf, bis eine Minimalkapazität in der elektrischen Energiespeichereinrichtung verbleibt, welche für den Start der Verbrennungskraftmaschine durch die elektrische Maschine ausreicht. Hierdurch wird sichergestellt, dass der Start nach Möglichkeit immer mit Energie aus der elektrischen Energiespeichereinrichtung des ersten elektrischen Netzes erfolgen kann.

Typischerweise ist dabei eine weitere Batterie, insbesondere eine 12V- oder 24V-Batterie in dem zweiten elektrischen Netz vorhanden. Diese soll jedoch nach Möglichkeit geschont werden, und kommt gemäß einer vorteilhaften Weiterbildung der Idee nur dann zum Einsatz, wenn die Minimalkapazität der elektrischen Energiespeichereinrichtung in dem ersten elektrischen Netz erreicht ist. Hierdurch steht immer noch eine Notfallenergieversorgung zur Verfügung, welche im Zweifel auch ausreichen würde, um die Verbrennungskraftmaschine zu starten, wenn der Energiewandler als bidirektionaler Energiewandler ausgestattet ist und das Spannungsniveau des zweiten elektrischen Netzes auch auf das des ersten elektrischen Netzes hochsetzen kann. Gleichzeitig wird durch das oben beschriebene Verfahren diese Batterie im zweiten elektrischen Netz, welche nachfolgend auch als Fahrzeugbatterie bezeichnet wird, immer maximal geschont, sodass diese eine hohe Lebensdauer erreichen kann und somit ein zuverlässiges "Backup" für die elektrische Energieversorgung und einen Start der Verbrennungskraftmaschine darstellt.

Das Spannungsniveau des ersten elektrischen Netzes ist gemäß einer außerordentlich günstigen Weiterbildung des erfindungsgemäßen Verfahrens so ausgestaltet, dass es unter 60 V Gleichspannung liegt, wobei das Spannungsniveau des zweiten elektrischen Netzes bei 12 V oder 24 V Gleichspannung liegt. Das erste elektrische Netz ist also so ausgebildet, dass es im Sinne der gängigen Regelungen und gesetzlichen Verordnungen nicht als sogenanntes Hochvolt- bzw. Hochspannungsnetz gilt. Die Sicherheitsanforderungen an ein solches elektrisches Netz, bei dem die Spannung unter dem Grenzwert von 60 V Gleichspannung liegt, sind sehr viel einfacher und lassen sich damit außerordentlich effizient und kostengünstig realisieren.

Insbesondere kann als Spannungsniveau für das erste elektrische Netz ein Spannungsniveau von 48 V verwendet werden. Hierfür sind zahlreiche Speichersysteme und Komponenten bereits kommerziell verfügbar, sodass sich die Verwendung eines derartigen Spannungsniveaus günstig auf die Kosten auswirkt. Das zweite elektrische Netz, also das Bordnetz des Fahrzeugs, kann in der üblichen Art als 12V- oder bei Nutzfahrzeugen vorzugsweise als 24V-Bordnetz ausgebildet sein. Auch hier besteht der Vorteil überwiegend darin, dass bestehende Netze und Komponenten einfach und effizient verwendet werden können. Der Energiewandler, welcher vorzugsweise als DC/DC-Wandler ausgestaltet ist, muss dann die Spannung von dem ersten elektrischen Netz bei beispielsweise 48 V zum zweiten elektrischen Netz bei beispielsweise 24 V lediglich halbieren bzw. wenn ein Betrieb auch in der Gegenrichtung erfolgen soll, sodass das Hybridfahrzeug beispielsweise fremdstartfähig ist, entsprechend auf die doppelte Spannung hochsetzen.

Eine vorteilhafte Ausgestaltung des erfindungsgemäßen Verfahrens sieht es ferner vor, dass das Verfahren als Teil des Getriebesystems ferner eine hydrodynamische verschleißfreie Dauerbremse nutzt. Eine solche hydrodynamische verschleißfreie Dauerbremse kann beispielsweise durch einen Primär- oder Sekundärretarder realisiert werden, oder kann beim Einsatz eines Getriebes mit Differenzialwandler auch durch den Wandler bereitgestellt werden. Bei Nutzfahrzeugen sind derartige Anwendungen, insbesondere die Verwendung von Retardern allgemein bekannt und üblich. Erfindungsgemäß ist es nun so, dass, solange das erforderliche Bremsmoment kleiner als das generatorische Moment der elektrischen Maschine ist, ausschließlich über die Maschine gebremst wird. Erst wenn das benötigte Bremsmoment über das maximale generatorische Moment der elektrischen Maschine hinausgeht, wird die hydrodynamische verschleißfreie Dauerbremse zugeschaltet. Diese Art des Bremsmanagements, bei welchem der Schwerpunkt des verschleißfreien Bremsens auf dem generatorischen Betrieb der elektrischen Maschine liegt, erlaubt es nun, eine maximale Energieausbeute aus dem Bremsvorgang zu realisieren. Je höher die Energieausbeute aus dem Bremsvorgang ist, desto mehr elektrische Energie kann in der elektrischen Energiespeichereinrichtung zwischengespeichert werden. Dadurch wird die Möglichkeit der Unterstützung des Antriebs durch die elektrische Maschine erhöht und die energieeffiziente elektrische Energieversorgung des Bordnetzes verbessert.

Gemäß einer sehr günstigen Weiterbildung des erfindungsgemäßen Verfahrens kann es außerdem vorgesehen sein, dass während eines Bremsbetriebs des Hybridfahrzeugs die Rückschaltdrehzahlen des Getriebes angehoben werden. Bei dem Getriebe kann es sich insbesondere um ein Automatikgetriebe oder ein automatisiertes Schaltgetriebe handeln. Hierdurch besteht die Möglichkeit, über die Getriebesteuerung Einfluss auf die Drehzahlschwellen, bei denen geschaltet wird, zu nehmen. Durch eine Erhöhung der Rückschaltschwellen beim Bremsbetrieb lässt sich so, ohne dass hierdurch Kraftstoff in dem Fahrzeug für die Verbrennungskraftmaschine benötigt wird, die Zeitdauer steigern, in welcher die elektrische Maschine mit konstanter generatorischer Leistung betrieben wird, um das Fahrzeug abzubremsen. Hierdurch wird ähnlich wie in der oben beschriebenen Ausgestaltung des erfindungsgemäßen Verfahrens die Energieausbeute aus dem generatorischen Betrieb der elektrischen Maschine erhöht und damit letztlich die elektrische Energieversorgung des zweiten elektrischen Netzes verbessert, ohne dass zusätzlicher Kraftstoff benötigt wird.

Gemäß einer weiteren sehr günstigen Ausgestaltung kann es ferner vorgesehen sein, dass während eines Schubbetriebs des Hybridfahrzeugs, in welchem keine Brems- und keine Beschleunigungsanforderung vorliegt, die elektrische Maschine mit einem geringen Drehmoment generatorisch betrieben wird, um auch in einem solchen Schubbetrieb eine gewisse Menge an elektrischer Leistung zu erzeugen und so die elektrische Leistungsversorgung zu verbessern.

Eine solche Vorgehensweise ist beispielsweise auch beim Einsatz von Retardern bekannt. Häufig ist es gewünscht, dass eine geringe Bremsleistung des Retarders im sogenannten Schubbetrieb vorliegt, um ein ungewolltes Beschleunigen des Fahrzeugs, wenn der Fahrer von der Bremse geht, zu vermeiden. Diese Technik lässt sich nun auf den Einsatz der elektrischen Maschine adaptieren, indem dieses geringe Bremsmoment, welches typischerweise in einer Größenordnung von maximal 70 bis 100 Nm liegt an der Eingangswelle, durch die elektrische Maschine aufgebracht wird und so zusätzliche elektrische Energie zu erzeugen, welche dann wiederum der elektrischen Energiespeichereinrichtung und damit der Energieversorgung des zweiten elektrischen Netzes in dem Hybridfahrzeug zugutekommt.

Insbesondere im Bereich der Nutzfahrzeuge ist es nun häufig so, dass diese in bestimmten Betriebsphasen erhöhte Abgastemperaturen benötigen, um entsprechende Vorgänge in der Abgasnachbehandlung besser oder überhaupt initiieren zu können. Bisher ist es gemäß dem Stand der Technik bei Nutzfahrzeugen häufig üblich, dass dann die Verbrennungskraftmaschine mit erhöhter Drehzahl und Leistung betrieben wird, um die Abgastemperatur in der gewünschten Art zu erhöhen. Die dabei anfallende Leistung wird in einer hydrodynamischen verschleißfreien Dauerbremse, beispielsweise einem Retarder, aufgenommen und wird dort in Wärme umgewandelt, welche über das Kühlsystem des Fahrzeugs abgeführt wird. Bei dem erfindungsgemäßen Verfahren kann es nun für eine solche Situation vorgesehen sein, dass die elektrische Maschine zur Erhöhung der Abgastemperatur der Verbrennungskraftmaschine, wenn eine solche erhöhte Abgastemperatur benötigt wird, als primäre Bremseinrichtung für die Verbrennungskraftmaschine generatorisch betrieben wird. Durch den Einsatz der elektrischen Maschine als Generator zum Abbremsen der Verbrennungskraftmaschine, wenn diese zur Erhöhung der Abgastemperatur mit einem höheren Drehmoment und/oder einer höheren Drehzahl betrieben wird, hat wiederum den Vorteil, dass zusätzliche elektrische Energie bereitgestellt wird.

Diese elektrische Energie kann dann in der elektrischen Energiespeichereinrichtung zwischengespeichert werden, um so die Energieversorgung der elektrischen Maschine für die Antriebsunterstützung und insbesondere des zweiten elektrischen Netzes als Bordnetz des Hybridfahrzeugs zu verbessern.

Weitere vorteilhafte Ausgestaltungen des erfindungsgemäßen Verfahrens ergeben sich außerdem aus dem Ausführungsbeispiel, welches nachfolgend unter Bezugnahme auf die Figuren näher beschrieben wird.

Es zeigen:
- Fig. 1: eine prinzipielle Darstellung eines Hybridfahrzeugs in einem zur Umsetzung des erfindungsgemäßen Verfahrens geeigneten Aufbau; und
- Fig. 2: ein Diagramm der Fahrgeschwindigkeit und analog hierzu des Ladezustands der elektrischen Energiespeichereinrichtung über der Zeit.

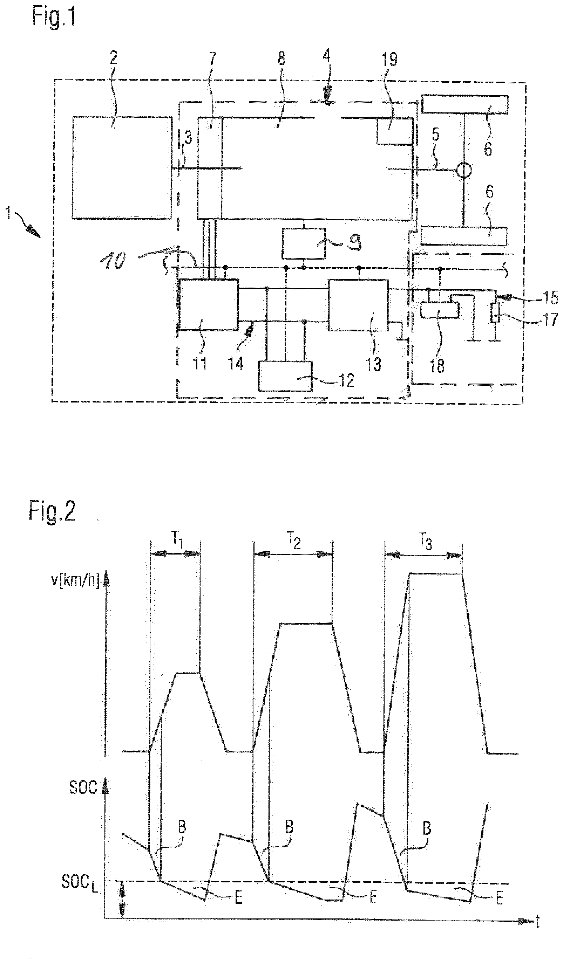

In der Darstellung der Fig. 1 ist ein Hybridfahrzeug 1 schematisch angedeutet. Es wird von einer Verbrennungskraftmaschine 2, beispielsweise einem Diesel-Motor oder auch einem Gas-Motor angetrieben. Über eine Eingangswelle 3 ist dieser mit einem Getriebesystem 4 verbunden, welches die gesamte Funktionalität des hybriden Antriebs außer der Verbrennungskraftmaschine 2 beinhaltet und steuert. Dieses Getriebesystem 4 ist über eine Ausgangswelle 5 mit zwei angedeuteten angetriebenen Rädern 6 verbunden. Teil des Getriebesystems 4 ist dabei eine elektrische Maschine 7 sowie ein Getriebe 8, beispielsweise ein Automatikgetriebe mit Differenzialwandler. Das Getriebe 8 kann einen hydrodynamischen Retarder T₉ als verschleißfreie Dauerbremse aufweisen. Ein weiterer Teil des Getriebesystems 4 ist die elektrische Steuerung. Hierfür ist ein Getriebesteuergerät 9 vorhanden, welches über ein Bussystem 10, vorzugsweise einen CAN-Bus, mit einem hier nicht dargestellten Fahrzeugsteuergerät verbunden ist. Ein weiterer Teil des Getriebesystems 4 ist ein Frequenzumrichter 11, welcher zur Ansteuerung der elektrischen Maschine dient. Ferner umfasst das Getriebesystem 4 eine elektrische Energiespeichereinrichtung 12, welche nachfolgend auch als Hybrid-Batterie bezeichnet wird. Die elektrische Energiespeichereinrichtung 12 muss dabei nicht als Batterie ausgestaltet sein. Sie kann beispielsweise auch in Form von Kondensatoren realisiert werden.

Als weiterer Teil des Getriebesystems 4 ist ein Energiewandler 13, vorzugsweise ein DC/DC-Wandler, vorhanden. Dieser wandelt die elektrische Energie von dem Spannungsniveau eines ersten elektrischen Netzes 14, welches beispielsweise bei 48 V liegt, auf die eines zweiten elektrischen Netzes 15, welches insbesondere das Bordnetz des Hybridfahrzeugs 1 inklusive seiner Verbraucher 17, von welchen hier lediglich einer angedeutet ist, darstellt. Dieses Bordnetz 15 des Hybridfahrzeugs kann beim Einsatz in einem Nutzfahrzeug insbesondere auf einem Spannungsniveau von 24 V arbeiten. Es verfügt neben den Verbrauchern 17 des Bordnetzes auch über eine Batterie 18, welche nachfolgend zur Unterscheidung von der Hybrid-Batterie 12 als Fahrzeugbatterie bezeichnet wird.

Dieser Aufbau des Hybridfahrzeugs 1 lässt sich nun in dem erfindungsgemäßen Verfahren insbesondere zur primären Bereitstellung von elektrischer Energie für das zweite elektrische Netz 15 durch das erste elektrische Netz 14 und die mit ihm gekoppelte elektrische Maschine 7 nutzen. Um diese Priorisierung der Versorgung des zweiten elektrischen Netzes 15 zu realisieren, kann es nun insbesondere so sein, dass für bestimmte Fahrsituationen des Hybridfahrzeugs 1 Betriebsvarianten gewählt werden, welche die elektrische Energieversorgung des zweiten elektrischen Netzes 15, welches nachfolgend auch als Bordnetz 15 bezeichnet wird, zu gewährleisten. In der Darstellung der Fig. 2 ist anhand von zwei analog übereinander angeordneten Diagrammen in der unteren Hälfte der Ladezustand SOC (State of Charge) über der Zeit t aufgetragen, darüber über derselben Zeitachse t die Fahrgeschwindigkeit v des Hybridfahrzeugs 1, beispielsweise in km/h. Die obere Kurve der Fahrgeschwindigkeit v zeigt einen Anstieg der Fahrgeschwindigkeit v und dann eine konstante Fahrgeschwindigkeit während einer mit T₁ bezeichneten Zeitspanne. Im Anschluss erfolgt ein Abbremsen des Hybridfahrzeugs 1. Seine Geschwindigkeit verringert sich und bleibt dann für eine gewisse Zeit auf 0. Anschließend erfolgt während einer Zeitspanne T₂ eine weitere Traktionsphase, wiederum gefolgt von einer Bremsphase und einem Stillstand. Ferner ist eine weitere Zeitspanne T₃ mit einer dritten Traktionsphase dargestellt. Die erreichten Endgeschwindigkeiten sind dabei jeweils unterschiedlich.

In der unteren Hälfte des Diagramms der Fig. 2 ist der Ladezustand SOC der Hybrid-Batterie 12 aufgezeigt. Dieser schwankt in den einzelnen Zeitabschnitten. Bevor die Zeitspanne T₁ startet und das Hybridfahrzeug 1 stillsteht, besteht ein gewisser Energiebedarf des Bordnetzes 15, welcher über den DC/DC-Wandler 13 aus der Hybrid-Batterie 12 gedeckt wird. Ihr Ladezustand SOC sinkt deshalb ab. Zu Beginn der Traktionsphase während der Zeitspanne T₁ erfolgt ein sogenannter Boost-Betrieb B, bei welchem die elektrische Maschine 7 zusätzlich zur Leistung von der Verbrennungskraftmaschine 2 elektrische Leistung auf die Eingangswelle 3 des Getriebes 8 gibt. Dies erfolgt so lange, bis ein Limit SOC_{L} des Ladezustands SOC der Hybrid-Batterie 12 erreicht ist. Anschließend wird der Boost-Betrieb B abgeschaltet und die Beschleunigung des Hybridfahrzeugs 1 erfolgt alleine über die Verbrennungskraftmaschine 2. Ungeachtet dessen tritt während der Zeitspanne T₁ und des stattfindenden Traktionsbetriebs ein Energiebedarf des Bordnetzes 15 auf, welcher aus der Hybrid-Batterie 12 gedeckt wird, sodass sich deren Ladezustand weiter verringert. Dieser elektrische Energiebedarf des Bordnetzes ist in der Darstellung mit dem Bezugszeichen E gekennzeichnet. Nach dem Ende der Zeitspanne t₁ wird das Hybridfahrzeug 1 abgebremst. Hierdurch kann über ein Abbremsen mittels der elektrischen Maschine 7 im generatorischen Betrieb elektrische Energie zurückgewonnen werden, die sogenannte Rekuperation. Hierdurch steigt der Ladezustand SOC der Hybrid-Batterie 12 wieder an. Im nachfolgenden Stillstand des Hybridfahrzeugs 1 entsteht wieder ein gewisser Energiebedarf für das Bordnetz 15, sodass der Ladezustand SOC der Hybrid-Batterie 12 wieder, jedoch mit entsprechend geringer Steigung abnimmt. Danach erfolgt die Traktionsphase während der Zeitspanne T₂. Auch hier wiederholt sich im Wesentlichen derselbe Ablauf, welcher bereits zuvor beschrieben worden ist. Dies wiederholt sich zyklisch während des Betriebs des Hybridfahrzeugs 1.

In der Praxis ist es nun so, dass der Grenzwert des Ladezustands SOC_{L}, bis zu welchem ein motorischer Betrieb der elektrischen Maschine 7 erfolgen darf, sich so bemisst, dass ein gleitender Mittelwert der Zeitspannen T₁ bis T₃ ermittelt wird, um vorherzusagen, was in der nächsten Traktionsphase als Zeitspanne T für den Traktionsbetrieb zu erwarten ist. Je mehr derartige Zeitspannen T vorliegen, desto genauer wird dies. Durch die gleitende Mittelwertbildung werden außerdem Ausreißer nicht oder nicht so stark berücksichtigt. Gleichzeitig wird ebenfalls vorzugsweise über ein Lernen über einen längeren Betriebszeitraum des Hybridfahrzeugs 1 hinweg ermittelt, wo der mittlere Energiebedarf E des Bordnetzes 15 liegt. Hierdurch ist es möglich, einen mittleren Energiebedarf E während der zu erwartenden nächsten Zeitspanne T der Traktion vorherzusagen. Dieser Bedarf soll nun auf jeden Fall aus der Hybrid-Batterie 12 gedeckt werden. Außerdem soll die Hybrid-Batterie 12 nicht unter ein vorgegebenes Limit entladen werden, um z. B. eine Tiefentladung zu vermeiden. Ferner ist es sinnvoll, dieses Limit so zu wählen, dass auch ein Wiederstart der Verbrennungskraftmaschine 2 über die elektrische Maschine 7 möglich ist, wenn der Fahrer beispielsweise das Hybridfahrzeug 1 am Ende der Traktionsphase abstellt, die Hybrid-Batterie 12 also wieder bis zum Wiederstart nicht über einen Rekuperationsvorgang nachgeladen werden kann. Ausgehend von diesen Überlegungen berechnet sich dann der Grenzwert SOC_{L} aus der Summe dieser benötigten Kapazitäten so, dass der Boost-Betrieb B lediglich so lange erfolgt, bis entweder die Beschleunigungsphase der Traktionsphase beendet ist oder der aktuelle Ladezustand SOC der Hybrid-Batterie 12 ebendiesen Grenzwert SOC_{L} erreicht. Der Boost-Betrieb wird dann eingestellt und die weitere Beschleunigung bzw. Fahrt erfolgt ausschließlich aus der Verbrennungskraftmaschine 2.

Hierdurch wird eine annähernd durchgehende elektrische Energieversorgung des Bordnetzes 15 über das erste elektrische Netz 14 des Hybridsystems und damit letztlich über die Hybrid-Batterie 12 gewährleistet. Lediglich in Ausnahmesituationen, oder wenn die Schätzung der zu erwartenden Traktionsdauer T sehr viel kürzer ausgefallen ist als die Traktionsphase tatsächlich andauert, kann es zu Situationen kommen, in denen die Hybrid-Batterie 12 ein unteres vorgegebenes Limit ihres Ladezustands SOC erreicht, welcher nicht unterschritten werden soll, um eine Tiefentladung zu vermeiden und/oder die Widerstandsfähigkeit sicherzustellen. Die elektrische Energieversorgung des Bordnetzes 15 über den Energiewandler 13 wird dann eingestellt. In diesen Situationen kann die Energieversorgung des elektrischen Bordnetzes 15 aus der Fahrzeugbatterie 18 erfolgen. Im regulären Betrieb werden diese Situationen vergleichsweise selten auftreten, sodass eine deutliche Schonung der Fahrzeugbatterie 18 möglich ist und diese nur sporadisch eingesetzt werden muss.

Die gesamte Energieversorgung des Fahrzeugs 1 und insbesondere die des Bordnetzes 15 bzw. seiner Verbraucher 17 erfolgt in dem hier dargestellten Ausführungsbeispiel also über die elektrische Maschine 7. Diese elektrische Maschine 7, welche insbesondere als permanenterregte elektrische Maschine mit vergrabenen Magneten ausgebildet ist, weist dabei einen sehr viel besseren Wirkungsgrad auf, als es herkömmliche Lichtmaschinen tun.

Klassische Lichtmaschinen sind zudem über eine Riemenanordnung mit dem Verbrennungsmotor verbunden. Riemenantriebe haben unter anderem den Nachteil, dass sie den Gesamtwirkungsgrad reduzieren.

Deshalb lässt sich bei einem solchen Aufbau eines Mild-Hybrid-Systems mit einer Priorisierung der Bordnetzversorgung durch die Hybrid-Batterie 12 und die elektrische Maschine 7 ein deutlich besserer Wirkungsgrad erzielen, als dies bei herkömmlichen Lichtmaschinen möglich ist. Zwar wird das Boost-Verhalten des Hybridsystems geringfügig eingeschränkt, dennoch ergibt sich ein erheblicher Vorteil hinsichtlich des Gesamtenergiebedarfs. Dies gilt insbesondere dann, wenn ein vergleichsweise hoher elektrischer Energiebedarf des Bordnetzes vorliegt, wie es insbesondere bei Nutzfahrzeugen, wie beispielsweise Omnibussen, der Fall ist.

Neben der reinen Rekuperation, welche in der Darstellung der Fig. 2 zur Erhöhung des Ladezustands SOC der Hybrid-Batterie 12 genutzt wird, lassen sich andere in der Beschreibung eingangs beschriebene Verfahren und Möglichkeiten nutzen, um die Hybrid-Batterie 12 möglichst in allen denkbaren Situationen ohne zusätzlichen Kraftstoffverbrauch zu laden. Hierfür kann beispielsweise der Einsatz der elektrischen Maschine 7 als primäre Bremse in allen denkbaren Situationen, in welchen mehr oder weniger stark abgebremst werden muss, vorgesehen sein. Außerdem kann beispielsweise durch eine Erhöhung der Drehzahlen der Rückschaltpunkte im Getriebe 8 ein vermehrter generatorischer Betrieb der elektrischen Maschine 7 bei konstant hohen Drehzahlen gewährleistet werden, um so die Energieausbeute der elektrischen Maschine weiter zu verbessern.

Alles in allem entsteht so ein sehr günstiger Mild-Hybrid-Aufbau, welcher durch die Priorisierung der elektrischen Energieversorgung des Bordnetzes 15 einen besonders energieeffizienten Betrieb des mit ihm ausgestatteten Hybridfahrzeugs 1 ermöglicht.

## Patentansprüche

1. Verfahren zum Betreiben eines Hybridfahrzeugs (1), welches
1.1 mit einer Verbrennungskraftmaschine (2), einer elektrischen Maschine (7) und einem Getriebe (8) betrieben wird, wobei
1.2 das Getriebe (8) über eine Eingangswelle (3) mit der Verbrennungskraftmaschine (2) verbunden ist,
1.3 einem ersten elektrischen Netz (14),
1.4 einem zweiten elektrischen Netz (15) als Bordnetz auf einem niedrigeren Spannungsniveau als das erste elektrische Netz (14),
1.5 das erste elektrische Netz (14) auf einem höheren Spannungsniveau als das zweite elektrische Netz (15) betrieben wird, wobei mit dem ersten elektrischen Netz gekoppelt:
1.5.1 die elektrische Maschine (7) motorisch oder generatorisch betrieben wird,
1.5.2 eine elektrische Energiespeichereinrichtung (12) betrieben wird,
1.5.3 ein Energiewandler (13) betrieben wird, welcher elektrische Leistung zumindest vom ersten elektrischen Netz (14) in das zweite elektrische Netz (15) überträgt, wobei
1.6 in dem zweiten elektrischen Netz (15) auf eine Lichtmaschine verzichtet wird, wobei
1.7 das erste elektrische Netz (14) als Teil eines Getriebesystems (4) ausgebildet ist, welches zusammen mit denen mit ihm gekoppelten Komponenten (7, 12, 13) über ein Getriebesteuergerät (9) angesteuert wird, wobei
1.8 durch die elektrische Maschine (7) im generatorischen Betrieb Leistung erzeugt wird,
1.9 die Energieversorgung des zweiten elektrischen Netzes (15) bei der Leistungsverteilung aus der Energiespeichereinrichtung (12) eine höhere Priorität als eine motorische Unterstützung des Antriebs der Eingangswelle (3) durch die elektrische Maschine (7) im motorischen Betrieb hat, wobei
1.10 eine mittlere Zeitdauer von Traktionsphasen des Hybridfahrzeugs (1) ermittelt wird,
1.11 ein mittlerer elektrischer Energiebedarf (E) durch das zweite elektrische Netz (15) ermittelt wird, wobei
1.12 eine motorische Unterstützung des Antriebs der Eingangswelle (3) durch die elektrische Maschine (7) nur dann und so lange erfolgt, wie die aktuelle Kapazität (SOC) der elektrischen Energiespeichereinrichtung (12) größer oder gleich der Summe aus dem mittleren elektrischen Energiebedarf (E) des zweiten elektrischen Netzes (15) während der mittleren Zeitdauer (T₁, T₂, T₃) und einer vorgegebenen Restkapazität der elektrischen Energiespeichereinrichtung (12) ist,
**dadurch gekennzeichnet, dass**
die mittlere Zeitdauer (T) und/oder der mittlere elektrische Energiebedarf (E) in Form eines gleitenden Mittelwerts bestimmt wird.

2. Verfahren nach Anspruch 1, **dadurch gekennzeichnet, dass** die elektrische Energieversorgung des zweiten elektrischen Netzes (15) durch das erste elektrische Netz (14) und den Energiewandler (13) so lange erfolgt, bis eine für den Start der Verbrennungskraftmaschine (2) durch die elektrische Maschine (7) erforderliche Minimalkapazität der elektrischen Energiespeichereinrichtung (12) erreicht ist.

3. Verfahren nach Anspruch 2, **dadurch gekennzeichnet, dass** die elektrische Energieversorgung des zweiten elektrischen Netzes (15) nach Erreichen der Minimalkapazität der elektrischen Energiespeichereinrichtung (12) aus einer Batterie (18) im zweiten elektrischen Netz (15) erfolgt.

4. Verfahren nach einem der Ansprüche 1 bis 3, **dadurch gekennzeichnet, dass** das Spannungsniveau des ersten elektrischen Netzes (14) unter 60 V Gleichspannung liegt, wobei das Spannungsniveau des zweiten elektrischen Netzes bei 12 V oder 24 V Gleichspannung liegt.

5. Verfahren nach Anspruch 4, **dadurch gekennzeichnet, dass** das Spannungsniveau des ersten elektrischen Netzes (15) bei 48 V Gleichspannung liegt.

6. Verfahren nach einem der Ansprüche 1 bis 5, **dadurch gekennzeichnet, dass** als elektrische Maschine (7) eine permanenterregte elektrische Synchronmaschine mit vergrabenen Magneten verwendet wird.

7. Verfahren nach einem der Ansprüche 1 bis 6, welches als Teil des Getriebesystems (4) ferner eine hydrodynamische verschleißfreie Dauerbremse (19) nutzt, **dadurch gekennzeichnet, dass**, so lange das erforderliche Bremsmoment kleiner als das generatorische Moment der elektrischen Maschine (7) ist, ausschließlich über die elektrische Maschine (7) gebremst wird, und dass ein über das maximale generatorische Moment der elektrischen Maschine (7) hinausgehende Bremsmoment durch die hydrodynamische verschleißfreie Dauerbremse (19) bereitgestellt wird.

8. Verfahren nach einem der Ansprüche 1 bis 7, **dadurch gekennzeichnet, dass** während eines Bremsbetriebs des Hybridfahrzeugs (1) die Rückschaltdrehzahlen des Getriebes (8) angehoben werden.

9. Verfahren nach einem der Ansprüche 1 bis 8, **dadurch gekennzeichnet, dass** während eines Schubbetriebs des Hybridfahrzeugs (1), in welchem keine Brems- und keine Beschleunigungsanforderung vorliegt, die elektrische Maschine (7) mit geringem Drehmoment generatorisch betrieben wird.

10. Verfahren nach einem der Ansprüche 1 bis 9, **dadurch gekennzeichnet, dass** die elektrische Maschine (7) zur Erhöhung der Abgastemperatur der Verbrennungskraftmaschine (2), wenn eine solche benötigt wird, als primäre Bremseinrichtung für die Verbrennungskraftmaschine (2) generatorisch betrieben wird.

## Claims

1. Method for operating a hybrid vehicle (1), which
1.1 is operated with an internal combustion engine (2), an electric machine (7) and a gear unit (8), wherein
1.2 the gear unit (8) is connected to the internal combustion engine (2) by means of an input shaft (3),
1.3 with a first electrical network (14),
1.4 with a second electrical network (15) as a vehicle electrical system at a lower voltage level than the first electrical network (14),
1.5 the first electrical network (14) is operated at a higher voltage level than the second electrical network (15), wherein, being coupled to the first electrical network:
1.5.1 the electric machine (7) is operated by motor or by generator,
1.5.2 an electrical energy storage device (12) is operated,
1.5.3 an energy converter (13) is operated, which transmits electrical power at least from the first electrical network (14) to the second electrical network (15), wherein
1.6 an alternator is not used in the second electrical network (15), wherein
1.7 the first electrical network (14) is designed as part of a transmission system (4), which, together with those components (7, 12, 13) that are coupled to said transmission system, is controlled by means of a transmission control unit (9), wherein
1.8 power is generated by means of the electric machine (7) in the generator mode,
1.9 during the power distribution from the energy storage device (12), the energy supply of the second electrical network (15) has a higher priority than a motor-mode support of the drive of the input shaft (3) by means of the electric machine (7) in the motor mode, wherein
1.10 an average duration of traction phases of the hybrid vehicle (1) is ascertained,
1.11 an average electrical energy requirement (E) is ascertained by means of the second electrical network (15), wherein
1.12 a motor-mode support of the drive of the input shaft (3) by means of the electric machine (7) only occurs when and as long as the prevailing capacity (SOC) of the electrical energy storage device (12) is greater than or equal to the sum of the average electrical energy requirement (E) of the second electrical network (15) during the average durations (T₁, T₂, T₃) and a specified residual capacity of the electrical energy storage device (12),
**characterized in that**
the average duration (T) and/or the average electrical energy requirement (E) is determined in the form of a moving average value.

2. Method according to Claim 1, **characterized in that** the electrical energy supply of the second electrical network (15) by means of the first electrical network (14) and the energy converter (13) occurs until a minimum capacity of the electrical energy storage device (12) is achieved, said minimum capacity being the capacity that is required to start the internal combustion engine (2) by means of the electric machine (7).

3. Method according to Claim 2, **characterized in that** the electrical energy supply of the second electrical network (15) occurs from a battery (18) in the second electrical network (15) after the minimum capacity of the electrical energy storage device (12) has been achieved.

4. Method according to one of Claims 1 to 3, **characterized in that** the voltage level of the first electrical network (14) is below 60 V DC, wherein the voltage level of the second electrical network is 12 V or 24 V DC.

5. Method according to Claim 4, **characterized in that** the voltage level of the first electrical network (15) is 48 V DC.

6. Method according to one of Claims 1 to 5, **characterized in that** a permanently excited electric synchronous machine having buried magnets is used as the electric machine (7).

7. Method according to one of Claims 1 to 6, that as part of the transmission system (4) also uses a hydrodynamic, wear-free sustained-action brake (19), **characterized in that**, as long as the required braking torque is smaller than the generator-mode torque of the electric machine (7), braking occurs exclusively by means of the electric machine (7), and **in that** a braking torque that exceeds the maximum generator-mode torque of the electric machine (7) is provided by means of the hydrodynamic, wear-free sustained-action brake (19) .

8. Method according to one of Claims 1 to 7, **characterized in that**, during a braking operation of the hybrid vehicle (1), the downshift speeds of the gear unit (8) are increased.

9. Method according to one of Claims 1 to 8, **characterized in that**, during a coasting mode of the hybrid vehicle (1), in which no braking or acceleration requirements are present, the electric machine (7) is operated by generator with a low torque.

10. Method according to one of Claims 1 to 9, **characterized in that** the electric machine (7) is operated by generator as a primary braking unit for the internal combustion engine (2) so as to increase the exhaust gas temperature of the internal combustion engine (2) if such an increase in the exhaust gas temperature is required.

## Revendications

1. Procédé permettant de faire fonctionner un véhicule hybride (1), qui
1.1 fonctionne à l'aide d'un moteur à combustion interne (2), d'une machine électrique (7) et d'une transmission (8), dans lequel
1.2 la transmission (8) est reliée au moteur à combustion interne (2) par l'intermédiaire d'un arbre d'entrée (3),
1.3 d'un premier réseau électrique (14),
1.4 d'un deuxième réseau électrique (15) comme réseau de bord à un niveau de tension inférieur à celui du premier réseau électrique (14),
1.5 le premier réseau électrique (14) fonctionnant à un niveau de tension supérieur à celui du deuxième réseau électrique (15), dans lequel les éléments suivants fonctionnent en étant couplés au premier réseau électrique :
1.5.1 la machine électrique (7) comme moteur ou comme générateur,
1.5.2 un dispositif d'accumulation d'énergie électrique (12),
1.5.3 un convertisseur d'énergie (13) qui transfère de la puissance électrique au moins du premier réseau électrique (14) dans le deuxième réseau électrique (15), dans lequel
1.6 dans le deuxième réseau électrique (15), un alternateur est omis, dans lequel
1.7 le premier réseau électrique (14) est réalisé comme une partie d'un système de transmission (4) qui est pilotée par un appareil de commande de transmission (9) conjointement avec les composants (7, 12, 13) qui sont couplés à celui-ci, dans lequel
1.8 la machine électrique (7) produit de la puissance en mode générateur,
1.9 l'alimentation en énergie du deuxième réseau électrique (15) présente pour la distribution de puissance à partir du dispositif d'accumulation d'énergie (12) une priorité supérieure à celle d'une assistance motrice de l'entraînement de l'arbre d'entrée (3) par la machine électrique (7) en mode moteur, dans lequel
1.10 une durée moyenne des phases de traction du véhicule hybride (1) est établie,
1.11 une demande en énergie électrique moyenne (E) du deuxième réseau électrique (15) est établie, dans lequel
1.12 une assistance motrice de l'entraînement de l'arbre d'entrée (3) n'est effectuée par la machine électrique (7) que si et tant que la capacité actuelle (SOC) du dispositif d'accumulation d'énergie électrique (12) est supérieure où égale à la somme de la demande d'énergie électrique moyenne (E) du deuxième réseau électrique (15) pendant la durée moyenne (T₁, T₂, T₃) et d'une capacité résiduelle prédéfinie du dispositif d'accumulation d'énergie électrique (12),
**caractérisé en ce que** la durée moyenne (T) et/ou la demande d'énergie électrique moyenne (E) sont déterminées sous la forme d'une moyenne mobile.

2. Procédé selon la revendication 1, **caractérisé en ce que** l'alimentation en énergie électrique du deuxième réseau électrique (15) par le premier réseau électrique (14) et le convertisseur d'énergie (13) est effectuée jusqu'à ce qu'une capacité minimale du dispositif d'accumulation d'énergie électrique (12), nécessaire au démarrage du moteur à combustion interne (2) par la machine électrique (7), soit atteinte.

3. Procédé selon la revendication 2, **caractérisé en ce qu'**après que la capacité minimale du dispositif d'accumulation d'énergie électrique (12) a été atteinte, l'alimentation en énergie électrique du deuxième réseau électrique (15) est effectuée à partir d'une batterie (18) dans le deuxième réseau électrique (15) .

4. Procédé selon l'une quelconque des revendications 1 à 3, **caractérisé en ce que** le niveau de tension du premier réseau électrique (14) est inférieur à 60 V de tension continue, le niveau de tension du deuxième réseau électrique se situant à 12 V ou 24 V de tension continue.

5. Procédé selon la revendication 4, **caractérisé en ce que** le niveau de tension du premier réseau électrique (15) se situe à 48 V de tension continue.

6. Procédé selon l'une quelconque des revendications 1 à 5, **caractérisé en ce qu'**une machine synchrone électrique à excitation permanente et à aimants enfouis est utilisée en tant que machine électrique (7).

7. Procédé selon l'une quelconque des revendications 1 à 6, qui exploite comme une partie du système de transmission (4) en outre un frein continu hydrodynamique sans usure (19), **caractérisé en ce que** tant que le couple de freinage nécessaire est inférieur au couple générateur de la machine électrique (7), le freinage passe exclusivement par la machine électrique (7), et **en ce qu'**un couple de freinage dépassant le couple générateur maximal de la machine électrique (7) est fourni par le frein continu hydrodynamique sans usure (19).

8. Procédé selon l'une quelconque des revendications 1 à 7, **caractérisé en ce que** pendant un fonctionnement de freinage du véhicule hybride (1), les vitesses de rotation de rétrogradation de la transmission (8) sont relevées.

9. Procédé selon l'une quelconque des revendications 1 à 8, **caractérisé en ce que** pendant un fonctionnement de poussée du véhicule hybride (1) dans lequel aucune demande de freinage et aucune demande d'accélération n'est donnée, la machine électrique (7) fonctionne en mode générateur à faible couple.

10. Procédé selon l'une quelconque des revendications 1 à 9, **caractérisé en ce que** pour augmenter la température des gaz d'échappement du moteur à combustion interne (2), si celle-ci est nécessaire, la machine électrique (7) fonctionne en mode générateur comme un dispositif de freinage primaire pour le moteur à combustion interne (2).
